# EUROPÄISCHE PATENTSCHRIFT

(11) **EP 3 284 221 B1**
(45) Veröffentlichungstag und Bekanntmachung des Hinweises auf die Patenterteilung: **17.04.2019**
(21) Anmeldenummer: 16721397.4
(22) Anmeldetag: 29.04.2016
(51) Int. Cl.: H04L 12/40, H04L 12/413

(54) **ÜBERTRAGUNG VON TELEGRAMMEN ÜBER EIN GEMEINSAM GENUTZTES MEDIUM**
TRANSFER OF TELEGRAMS OVER A SHARED MEDIUM
TRANSFERT DE TÉLÉGRAMMES SUR UN SUPPORT PARTAGÉ

(30) Priorität: 18.06.2015 DE 102015211281
(43) Veröffentlichungstag der Anmeldung: 21.02.2018
(73) Patentinhaber: Siemens Aktiengesellschaft, 80333 München (DE)
(72) Erfinder: COULON, David, 71069 Sindelfingen (DE); HERBSTRITT, Martin, 71272 Renningen (DE); KRENZ, Albert, 71139 Ehningen (DE); LINZMAIER, Klaus-Peter, 73650 Winterbach (DE); NOURDDINE, Hicham, 71263 Weil der Stadt (DE)
(86) Internationale Anmeldenummer: PCT/EP2016/059670
(87) Internationale Veröffentlichungsnummer: WO 2016/202494

(56) Entgegenhaltungen:
- CN-B- 103 179 613
- US-A1- 2014 092 083
- GIANLUCA CENA ET AL: "A distribute-merge switch for EtherCAT networks", FACTORY COMMUNICATION SYSTEMS (WFCS), 2010 8TH IEEE INTERNATIONAL WORKSHOP ON, IEEE, PISCATAWAY, NJ, USA, 18. Mai 2010 (2010-05-18), Seiten 121-130, XP031732748, ISBN: 978-1-4244-5460-0
- SCHUMACHER M ET AL: "A new approach for increasing the performance of the industrial Ethernet system PROFINET", FACTORY COMMUNICATION SYSTEMS, 2008. WFCS 2008. IEEE INTERNATIONAL WORKSHOP ON, IEEE, PISCATAWAY, NJ, USA, 21. Mai 2008 (2008-05-21), Seiten 159-167, XP031344906, ISBN: 978-1-4244-2349-1

## Beschreibung

Die Erfindung betrifft ein Verfahren, eine Netzwerkanordnung sowie eine entsprechende Modemanordnung zur Übertragung von Telegrammen über ein gemeinsam genutztes Medium. Des Weiteren betrifft die Erfindung ein industrielles Fördersystem, bei dem das erfindungsgemäße Verfahren zum Einsatz kommt.

Ein derartiges Verfahren, eine derartige Netzwerkanordnung sowie entsprechende Modemanordnungen kommen beispielsweise in einem Schleifleiternetzwerk einer industriellen Hängebahn oder auch Elektrohängebahn-Anlagen (EHB-Anlagen) zum Einsatz. Weitere Anwendungen existieren beispielsweise bei Regalbediengeräten, Flurförderzeugen, Krananlagen, Drehdurchführungen und Drehtischen, Aufzügen und Hebezeuge, Verschiebewagen und Fahrgeschäfte. Elektrohängebahnen bestehen aus einer stationären Anlagensteuerung und Energieversorgung, dem Schienensystem und den mobilen Fahrzeugen. Die mobilen Fahrzeuge sind entweder über Abnehmer, insbesondere Schleifer, mit festen Stromschienen, Schleifleitern oder Schleifringen verbunden oder es werden Schleppkabel eingesetzt.

Aus US 2014/092083 A1 sind Verfahren und eine Vorrichtung zur Implementierung eines RTU-Netzwerks, wobei eine RTU eine remote terminal unit oder auch eine Remote-Terminaleinheit ist, bekannt. Dabei kommt ein Zeitschlitzverfahren zum Einsatz, wobei jedem Telegramm für jede RTU je ein Zeitschlitz zugewiesen wird.

Dokument CN 103 179 613 B repräsentiert ebenfalls den Stand der Technik.

Der Erfindung liegt die Aufgabe zugrunde, ein Verfahren anzugeben, das die Anzahl der Zugriffe auf das gemeinsam genutzte Medium reduziert. Des Weiteren ist es Aufgabe der Erfindung eine Netzwerkanordnung sowie eine Modemanordnung anzugeben, die zur Umsetzung des Verfahrens geeignet sind.

Diese Aufgabe wird durch ein Verfahren mit den im Anspruch 1 angegebenen Merkmalen gelöst. Dabei werden Telegramme über ein gemeinsam genutztes Medium in einem Netzwerk, insbesondere in einem industriellen Schleifleiternetzwerk, übertragen. Das Netzwerk weist ein Steuergerät, eine Master-Ebene, das gemeinsam genutzte Medium, eine Slave-Ebene und Endgeräte auf, wobei ein Zugriff auf das gemeinsam genutzte Medium jeweils über master- und/oder slaveseitige Modems erfolgt, wobei das Steuergerät mit den Endgeräten über das gemeinsam genutzte Medium kommuniziert, wobei mindestens ein master- und/oder slaveseitiger Traffic-Manager den master- und/oder slave-seitigen Modems Telegramme zur Verfügung stellt und wobei die master- und/oder slaveseitigen Traffic-Manager Kenntnis der Struktur von relevanten Teilen des Netzwerks aufweisen und die Telegramme in Gruppen von Telegrammen zusammenfassen.

Die Erfindung basiert auf der Erkenntnis, dass die Anzahl der Zugriffe auf das gemeinsam genutzte Medium reduziert werden können, wenn die master- und/oder slaveseitigen Traffic-Manager Kenntnis der Struktur von relevanten Teilen des Netzwerks aufweisen und die Telegramme in Gruppen von Telegrammen zusammenfassen.

Die Master-Ebene ist dabei als organisatorische Ebene zu sehen, die sich auf Seite der Steuergeräte befindet. Es ist aber nicht auszuschließen, dass auch in der Master-Ebene Endgeräte angeordnet sind. Analog ist die Slave-Ebene der Bereich, in dem die Endgeräte angeordnet sind. Das gemeinsam genutzte Medium, im englischen Sprachraum auch als Shared Medium bezeichnet, verbindet die Geräte der Master-Ebene mit den Geräten der Slave-Ebene. Bei dem gemeinsam genutzten Medium handelt es sich um eine Netzwerkverbindung, nicht im Sinne eines klassischen, sogenannten geswitchten Netzwerks, wie beispielsweise switched Ethernet, sondern allgemein im Sinne eines von mehreren Kommunikationspartnern benutzten Kommunikationsmediums. Es kann sich dabei beispielsweise um ein Schleifleiter-Netzwerk, ein Powerline-Netzwerk oder ein Funknetzwerk handeln. In einem Schleifleier-Netzwerk kommunizieren mehrere Teilnehmer über ein Netzwerk von Schleifleitern. Bei dem gemeinsam genutzten Medium kann es sich also um ein leiter- und/oder kabelgebundenes Netzwerk handeln, dessen Teilnehmer zumindest teilweise gegenüber dem Netzwerk selbst beweglich gelagert sind. Das Steuergerät ist dabei ganz allgemein als Steuerung oder Steuerfunktion für die Endgeräte und eventuell weitere Geräte zu sehen. Es handelt sich dabei zum Beispiel um eine Industriesteuerung, die Endgeräten wie Motorsteuerungen oder Sensoranordnungen Steuerbefehle sendet oder Messwerte von diesen erhält. Jegliche Geräte, die miteinander kommunizieren, können und sollen dies über das gemeinsam genutzte Medium tun. Beispielsweise könnte es sich bei einer Hängebahn, die über ein Schleifleiternetzwerk im Sinne eines gemeinsam genutzten Mediums angesteuert wird, bei einem Steuergerät um eine zentrale Steuereinrichtung handeln, die den Fahrzeugen der Hängebahn ihre Bewegungsprofile liefert. In einem solchen Fahrzeug können mehrere Endgeräte angeordnet sein. Ebenso ist es möglich, dass jedes dieser Fahrzeuge mehrere Modems aufweist. Das Steuergerät koordiniert beispielsweise im Falle einer EHB-Anlage, die dort befindlichen Fahrzeuge und gibt Zielkoordinaten und Geschwindigkeiten vor. Auf dem Steuergerät wird beispielsweise die Automatisierungslogik der EHB-Anlage hinterlegt. Sie führt die Automatisierungslogik aus, steuert die Fahrzeuge und verhindert mechanische Kollisionen. Die Automatisierungslogik kann weiterhin manuelles Eingreifen über HMI Terminals ermöglichen.

Ein Modem ist ein Gerät, das den Zugriff auf das gemeinsam genutzte Medium ermöglicht. Die Modems sind also die Schnittstelle zwischen dem gemeinsam genutzten Medium und dem restlichen Netzwerk. Greift nun ein Modem durch einen Zugriff auf das gemeinsam genutzte Medium zu, so ist das gemeinsam genutzte Medium, zumindest während dieses Zugriffs und in einer bestimmten Reichweite des Modems, für andere Modems gesperrt. Sollte dennoch ein anderes Modem gleichzeitig Telegramme und/oder Daten senden, so kann es zu einer Kollision von Telegrammen kommen. Es ist also wichtig, während eines Zugriffs auf das gemeinsam genutzte Medium möglichst nur die Telegramme und/oder Daten zu versenden, die nötig sind und gleichzeitig so viele Daten wie in diesem Zeitraum möglich. Um dies zu realisieren, weist ein Traffic-Manager Kenntnis der Struktur von relevanten Teilen des Netzwerks auf und fasst Telegramme in Gruppen von Telegrammen zusammen.

Relevante Teile des Netzwerks können dabei die dem jeweiligen Traffic-Manager zugeordneten, über- oder untergeordneten Teile des Netzwerks sein. Dabei sind insbesondere die erreichbaren Modems sowie die erreichbaren Endgeräte von Bedeutung. Ob ein Teil des Netzwerks relevant ist, hängt stark von der tatsächlichen Topologie des Netzwerks und des gemeinsam genutzten Mediums ab.

Bei dem Traffic-Manager kann es sich beispielsweise um einen dedizierten Controller handeln. Es kann sich aber ebenso um Tasks auf beispielsweise einem System, das sowieso schon zur Ansteuerung der Modems genutzt wird, handeln. Die masterseitigen Traffic-Manager unterscheiden sich von den slaveseitigen Traffic-Managern nur insofern, als masterseitig mit mehr Telegrammen, also mit insgesamt mehr Datendurchsatz, zu rechnen ist. Unabhängig davon ist nicht ausgeschlossen, dass in gewissen Situationen und Bereichen des Netzwerks auch slaveseitig temporär oder sogar dauerhaft mehr Telegramme als masterseitig anfallen.

Aufgrund der potentiell großen physikalischen Ausdehnung des gemeinsam genutzten Mediums erreichen nicht alle masterseitigen Modems alle slaveseitigen Modems. Es ist vielmehr davon auszugehen, dass masterseitige Modems nur die ihnen zugeordneten slaveseitigen Modems erreichen. Die Traffic-Manager können beispielsweise in das Steuergerät als auch in die Master-Modems integriert sein.

Die Traffic-Manager ermöglichen es also, die limitierten Kapazitäten des gemeinsam genutzten Mediums optimal auszunutzen. Durch das Gruppieren der Telegramme ist dies einfach und effizient möglich. Besonders Vorteilhaft ist, dass die maximale Anzahl von Teilnehmern eines gemeinsam genutzten Mediums durch Zusammenfassen von Telegrammen in Gruppen von Telegrammen einfach und effizient gesteigert werden kann. So kann ohne zusätzlichen Hardwareaufwand die Anzahl der Teilnehmer erhöht werden oder bei gleichbleibender Anzahl an Teilnehmern eine weniger leistungsfähige und folglich günstigere Infrastruktur gewählt werden.

In der Regel ist davon auszugehen, dass das Gruppieren von Telegrammen vor allem in Richtung der Endgeräte, also vom Steuergerät weg, Vorteile bringt, da hier der zu erwartende Traffic, also die Anzahl der Telegramme, entsprechend groß ist. Es ist aber nicht auszuschließen, dass auch vom Endgerät weg in Richtung Steuergerät sinnvolle Gruppierungsmöglichkeiten bestehen. Beispielsweise kann dies der Fall sein, wenn über ein slaveseitiges Modem besonders viele Endgeräte zu erreichen sind und diese in bestimmten Fällen besonders viele Daten an das Steuergerät zurückmelden.

Gemäß dem Verfahren der Erfindung bildet der Traffic-Manager auf Basis der Kenntnis der Struktur von relevanten Teilen des Netzwerks die Gruppen von Telegrammen. Der Traffic-Manager zieht also die Kenntnis der Struktur von relevanten Teilen des Netzwerks zum Bilden der Gruppen von Telegrammen heran. So fließt vorteilhaft die Struktur-Information in die Gruppen ein, die Telegramme können noch effizienter zugestellt werden und das Netzwerk wird optimal ausgelastet.

Gemäß dem Verfahren der Erfindung bildet der Traffic-Manager auf Basis von Informationen bezüglich der über den jeweiligen Traffic-Manager erreichbaren Modems und/ oder Endgeräten die Gruppen von Telegrammen. Es fließen nun die Informationen bezüglich der über den jeweiligen Traffic-Manager erreichbaren Modems direkt in das Bilden der Gruppen ein. Dies bietet den Vorteil, dass die Gruppen, die auf diese Art und Weise gebildet wurden, noch effizienter verteilt werden können und die Auslastung des Netzwerks noch gesteigert werden kann.

In einer weiteren vorteilhaften Ausgestaltung fasst der Traffic-Manager nur diejenigen Telegramme in Gruppen von Telegrammen zusammen, die für Modems und/oder Endgeräte bestimmt sind, die über den jeweiligen Traffic-Manager erreichbar sind. Dies kann dann von Vorteil sein, wenn ein Großteil der Telegramme lediglich einzelnen Endgeräten zuzustellen sind und nur wenige oder keine Telegramme an alle Teilnehmer des Netzwerks zugestellt werden sollen. Darüber hinaus kann mit dieser Art der Gruppierung auch das Recht des Zugriffs der Modems auf das gemeinsam genutzte Medium vergeben werden. Dies hat den Vorteil, dass nicht nur mehr Teilnehmer über das gemeinsam genutzte Medium versorgt werden, sondern auch durch die Zugriffskontrolle Kollisionen vermieden und Determinismus garantiert werden können.

In einer weiteren Ausgestaltung steuert und/oder liest mindestens ein Modem-Manager die Modems an und/oder aus. Ein Modem-Manager ist dabei eine Komponente, die Einstellungen an einem Modem vornimmt, das zum Zugriff auf das gemeinsam genutzte Medium geeignet ist. Zu diesen Einstellungen zählt u.a die Auswahl der Funktion, also ob ein Master- oder ein Slave-Modem vorliegt. Weiterhin können, insbesondere bei Leitungsgebundenen gemeinsam genutzten Medien wie Schleifleiternetzwerken, eine Amplitude-Map für die Modulation sowie Grenzwerte für die modeminternen Verstärkerstufen gesetzt werden. Weiterhin kann der Modem-Manager Informationen auslesen, beispielsweise eine Tonemap, also wie viele Bits pro Träger codierbar sind oder der aktuelle und potentiell der vorhergehende Verbindungsstatus. Handelt es sich um ein Master-Modem so sind eine Teilnehmerliste oder eine Topologie, beispielsweise welche Modems und/oder welche Teilnehmer hinter welchem Modem erreichbar sind auslesbar. Dazu könnten beispielsweise die Adressaten der Telegramme und/oder der Payload ausgewertet werden.

In einer weiteren Ausführungsform bezieht der master- und/ oder slaveseitige Traffic-Manager die Kenntnis der Struktur von relevanten Teilen des Netzwerks zumindest teilweise von einem master- und/oder slaveseitige Modem-Manager. Die Modem-Manager könnten in diesem Fall über Auswertungen der Adressaten der Telegramme entsprechende Listen erstellen, welche Komponenten über die dem Modem-Manager zugeordneten Modems erreichbar sind. Der Traffic-Manager erhält dann wiederum vom Modem-Manager entsprechende Listen und kann so diese Informationen über die Topologie zum Bilden von Gruppen verwenden. Dies ist besonders effektiv, da der Traffic-Manager so die Topologie-Information nicht selbst erlernen muss, sondern diese von den Modem-Managern zur Verfügung gestellt bekommt. Der Traffic-Manager kann also die ihm zur Verfügung stehende Rechenzeit voll zum Gruppieren von Telegrammen verwenden. Es ist allerdings nicht ausgeschlossen, dass Traffic-Manager und Modem-Manager in einer Komponente realisiert sind. Es ist ebenso denkbar, dass der Traffic-Manager seine Struktur-Informationen ausschließlich von einem Modem-Manager bezieht, es ist aber auch ebenso möglich, dass der Traffic-Manager zumindest Teile der Struktur bereits bei der Inbetriebnahme des Systems mitgeteilt bekommt.

In einer weiteren Ausführungsform entscheidet der master- und/oder slaveseitige Traffic-Manager für jeden Zugriff auf das gemeinsam genutzte Medium, welche Gruppen von Telegrammen mit diesem Zugriff gesendet werden. Prinzipiell sollte gelten, dass das Modem, das aktuell Zugriff auf das gemeinsam genutzte Medium hat und damit das gemeinsam genutzte Medium für sich alleine beansprucht, so viele Telegramme wie möglich in der vorgegebenen Zeit versendet. Die vorgegebene Zeit kann dabei ein fester Zeitbereich sein oder auch einfach nur die Maßgabe, so schnell wie möglich die Übertragung zu beenden und damit das gemeinsam genutzte Medium wieder freizugeben. Der Traffic-Manager kann hier nun vorteilhaft eingreifen, indem er entscheidet, welche Gruppen von Telegrammen unbedingt beim nächsten Zugriff auf das gemeinsam genutzte Medium versendet werden müssen und welche Gruppen von Telegrammen noch zurückgehalten werden können. Dies führt zu einer effizienter Abarbeitung der einzelnen Gruppen und damit zu einer höheren Kapazität des gemeinsam genutzten Mediums, da das gemeinsam genutzte Medium nicht mit dem Versand von Gruppen von Telegrammen blockiert wird, die zum derzeitigen Zeitpunkt noch nicht versendet werden müssten. Basiert das gemeinsam genutzte Medium auf einer Übertragung von sogenannten Symbolen, so ist es denkbar, dass eine entsprechend große Gruppe auf mehrere aufeinanderfolgende Symbole aufgeteilt wird. Ebenfalls ist es möglich mehrere Gruppen mittels mehrerer aufeinanderfolgender Symbole zu übertragen.

In einer weiteren vorteilhaften Ausführungsform zieht der Traffic-Manager Prioritätslevels zum Bilden der Gruppen von Telegrammen heran. Prioritätslevels können dabei beispielsweise zeitlicher oder kausaler Natur sein. Einerseits können Telegramme, die bezüglich ihrer Übertragungszeit schon einen langen Weg hinter sich hatten, einen höheren Prioritätslevel zugewiesen bekommen. Andererseits können Telegramme, die idealerweise sofort versendet werden müssen, wie beispielsweise Not-Aus-Signale, ebenfalls mit einem höheren oder dem höchsten Prioritätslevel versehen werden. Dies hat den Vorteil, dass trotz optimaler Ausnutzung des gemeinsam genutzten Mediums wichtige Telegramme zuverlässig und deterministisch bei dem richtigen Empfänger ankommen. Die Prioritätslevels könnten dabei beispielsweise direkt in den Header-Informationen der Telegramme enthalten sein, sie könnten aber auch im Traffic Manager für bestimmte Arten von Telegrammen hinterlegt sein oder dort beispielsweise aus der Laufzeit errechnet werden.

Ein Kompromiss zwischen optimaler Ausnutzung des gemeinsam genutzten Mediums und der Vermeidung unzulässig hoher Übertragungszeiten kann weiterhin erreicht werden, indem die Traffic-Manager Kenntnis über die Anforderungen an die zulässige Übertragungsdauer für die einzelnen Telegramme oder Gruppen erlangen. Auf Basis der Anforderungen an die zulässige Übertragungsdauer sind dann die Traffic-Manager in der Lage, die Wartezeit auf passende Telegramme so zu wählen, dass die Anforderungen bezüglich der Übertragungszeit gerade nicht verletzt werden. Dies setzt voraus, dass die Traffic-Manager neben der Kenntnis der Struktur von relevanten Teilen des Netzwerks auch für jedes relevante Strukturelement die Anforderungen an die tolerierbare Übertragungsdauer kennen. Es ist beispielsweise davon auszugehen, dass ein Endgerät, das z.B. alle 128 ms Telegramme vom Steuergerät erhalten soll, auch Telegramme noch akzeptiert, wenn die Übertragung länger als 128 ms dauert. In PROFINET Standardeinstellungen kann die Dauer sogar bis zu 256 ms betragen, wenn die Zykluszeit bei 128 ms liegt. In einer optimierten Ausführung kann die zulässige Übertragungsdauer individuell für jedes relevante Endgerät einstellbar sein.

Auf Basis der Struktur ist der Traffic-Manager demnach zusätzlich in der Lage, für jedes über ihn, bzw. über sein Modem, erreichbare Element, wie z.B. master- / slaveseitige Modems und hieran angeschlossene Endgeräte, zu ermitteln, wie oft diese mit Daten versorgt werden müssen bzw. wie oft diese Daten bereitstellen. Die beschriebene Abfolge der Kommunikation müsste dann nicht gemäß der Liste der bekannten Empfänger umlaufend erfolgen, sondern könnte bedarfsorientiert abgearbeitet werden. Beispielsweise werden immer dann alle Telegramme an das Modem übertragen wenn eines der Endgeräte, der Traffic- oder der Modem-Manager spätestens mit Daten versorgt werden muss. Eine Rückantwort könnte auch nur dann angefordert werden, wenn die in der Gegenrichtung zu übertragenden Telegramme nicht bis zum nächsten Umlauf warten können.

In einer weiteren Ausführungsform kommt zur Vermeidung von Kollisionen im gemeinsam genutzten Medium ein Protokoll zur Kollisionsvermeidung bei der Übertragung von Telegrammen zum Einsatz. Derartige Protokolle können beispielsweise CSMA/CA, CSMA/CD oder Token sowie Kombinationen oder artverwandte Verfahren sein. Das erfindungsgemäße Verfahren ermöglicht es, Telegramme effizienter zu ihren Empfängern zu senden. Nicht berücksichtigt wurde dabei die Möglichkeit, dass zwei Modems gleichzeitig auf das gemeinsam genutzte Medium zugreifen und so eine Kollision verursachen. Bei kleineren Systemen kann eine Kollisionsvermeidung durch entsprechend großzügige Auslegung der Kommunikationsbandbreite vermieden werden. Bei Systemen oder Netzwerken mit vielen Teilnehmern ist es aber vorteilhaft, ein Protokoll zur Kollisionsvermeidung zu verwenden. So wird das erfindungsgemäße Verfahren noch zuverlässiger und die Anzahl der Teilnehmer kann bei gleichbleibender Hardware und bei gleichbleibenden Kosten noch weiter gesteigert werden. Dabei könnten beispielsweise sowohl die Slaveals auch die Master-Traffic-Manager kollisionsvermeidende Verfahren anwenden. Beispielsweise kann als unterlagertes Verfahren zur Kollisionsvermeidung eines der CSMA Verfahren zum Einsatz kommen. Dem ersten Verfahren zur Kollisionsvermeidung überlagert und damit kombiniert kann dann wiederum ein Master-Slave Verfahren werden. Beispielsweise sendet ein Master zumindest ein Telegramm an einen Slave und dieser dann seinerseits zumindest ein Telegramm an den Master zurück. Hierdurch versucht zu jedem Zeitpunkt nur genau eine Netzkomponente (Master oder Slave) auf das Medium zuzugreifen und es kann nicht zu Kollisionen kommen.

Die Aufgabe wird weiterhin durch eine Netzwerkanordnung zum Übertragen von Telegrammen über ein gemeinsam genutztes Medium in einem Netzwerk mittels des erfindungsgemäßen Verfahrens gelöst, wobei die Netzwerkanordnung ein Steuergerät, eine Master-Ebene, ein gemeinsam genutztes Medium, eine Slave-Ebene und Endgeräte, je mindestens ein master- und ein slave-seitiges Modem und je mindestens einen master- und einen slave-seitigen Traffic-Manager aufweist. Zentrales Element dieser Netzwerkanordnung ist das gemeinsam genutzte Medium. Bei dem gemeinsam genutzten Medium kann es sich, wie eingangs schon erwähnt, um ein Schleifleiternetzwerk handeln, wobei die Endgeräte bezüglich des gemeinsam genutzten Mediums beweglich sind. Mit dem erfindungsgemäßen Verfahren ist es dieser Netzwerkanordnung möglich, mehr Teilnehmer zu verwalten und zu betreiben.

In einer weiteren Ausführungsform ist das gemeinsam genutzte Medium ein kabel- und/oder leitungsgebundenes Medium mit beweglichen Kontakten, insbesondere Schleifleitern. Ein kabel- und/oder leitungsgebundenes Medium steht dabei für eine Datenübertragung über jegliche Kabel/Leiter, mit einem oder mehreren Adern, die zumindest theoretisch zum Übertragen von Daten und/oder elektrischer Leistung geeignet sind. Die Kabel und/oder Leitungen des Schleifleiternetzwerks können dabei eine Trägerspannung, insbesondere eine Trägerwechselspannung von nominal +/-42V, aufweisen. Ebenso ist denkbar, dass über die Kabel/Leitungen zusätzlich zu dem Datensignal ein Strom zur Versorgung von dritten Geräten fließt.

Die Aufgabe wird weiterhin durch eine Modemanordnung zur Durchführung des erfindungsgemäßen Verfahrens gelöst, wobei die Modemanordnung mindestens ein Modem und einen Traffic-Manager aufweist. Diese Modemanordnung kann je nach eingesetzter Ebene, also ob in der Master- oder der Slave-Ebene, feststehend oder mitbewegt sein. Sind also beispielsweise in der Slave-Ebene Modems angeordnet, so könnten sich diese über einen Schleifleiter gegenüber dem gemeinsam genutzten Medium bewegen. Die Modem-Anordnung ist dabei derart ausgebildet, dass sie einen Zugriff auf das gemeinsam genutzte Medium ermöglicht. Dies können beispielsweise entsprechende Netzwerkschnittstellen sein, die ein Signal auf ein Kabel oder einen Leiter aufmodulieren. Der Traffic-Manager muss nicht unbedingt physikalisch an dem Modem selbst angeordnet sein, sondern kann auch über eine weitere Netzwerkverbindung damit verbunden sein. Selbstverständlich ist auch eine Möglichkeit denkbar, in der der Traffic-Manager in eine Rechnereinheit des Modems integriert ist oder direkt an das Modem angebracht oder angeschlossen ist.

In einer weiteren Ausführungsform weist die Modemanordnung einen Modem-Manager auf. Dies ist insbesondere dann von Vorteil, wenn der Traffic-Manager die Kenntnis von relevanten Teilen des Netzwerks vom Modem-Manager erlernt.

Das erfindungsgemäße Verfahren kommt besonders vorteilhaft in einem industriellen Fördersystem zum Einsatz. Besonders bei Hängebahnsystemen, deren Endgeräte über Schleifleiter mit dem gemeinsam genutzten Medium verbunden sind, ist dieses Verfahren vorteilhaft, da so die Anzahl der Fahrzeuge erhöht werden kann.

Im Folgenden wird die Erfindung anhand der in den Figuren dargestellten Ausführungsbeispiele näher beschrieben und erläutert. Es zeigen:
- FIG 1: eine Netzwerkanordnung, aufweisend ein gemeinsam genutztes Medium,
- FIG 2: eine Modemanordnung in funktionaler Darstellung,
- FIG 3: eine Modemanordnung in prinzipiell physikalischer Darstellung,
- FIG 4: eine Darstellung der Zugriffe mehrerer Modems auf das gemeinsam genutzte Medium und
- FIG 5: eine exemplarische Darstellung der Gruppierung und Übertragung von Telegrammen über das gemeinsam genutztes Medium.

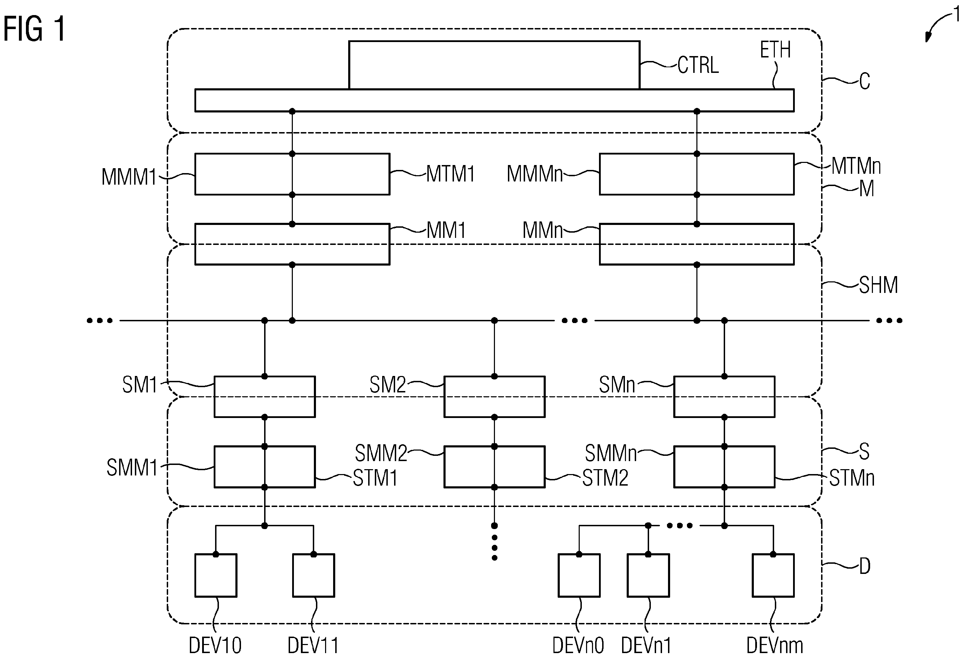

FIG 1 zeigt eine Netzwerkanordnung in Form eines Netzwerks 1. Das Netzwerk 1 weist dabei eine Control-Ebene C, eine Master-Ebene M, ein gemeinsam genutztes Medium SHM, eine Slave-Ebene S sowie eine Device-Ebene D auf. Dabei gilt, dass, wo es logisch und funktionell sinnvoll ist, die Master-Ebene M die Control-Ebene C enthalten kann und die Slave-Ebene S die Device-Ebene D enthalten kann. Ebenso ist denkbar, dass weitere Ebenen in andere integriert werden oder weitere Zwischenebenen eingefügt werden, die weitere Funktionen übernehmen. In der Control-Ebene C befindet sich ein Steuergerät CTRL sowie eine Ethernet-Verbindung ETH. Die Ethernet-Verbindung ETH verbindet das Steuergerät CTRL zunächst mit der Master-Ebene M. Die Master-Ebene M enthält Master-Modem-Manager MMM1, ..., MMMn sowie Master-Traffic-Manager MTM1, ..., MTMn. Die Schnittstelle zwischen der Master-Ebene M und dem gemeinsam genutzten Medium SHM bilden Master-Modems MM1, ..., MMn. Ebenso an das gemeinsam genutzte Medium SHM angebunden sind die Slave-Modems SM1, ..., SMn, die als Schnittstelle zur Slave-Ebene S dienen. Die Slave-Ebene S weist Slave-Modem-Manager SMM1, ..., SMMn und Slave-Traffic-Manager STM1, ..., STMn auf. Die Device-Ebene D weist Endgeräte DEV10, ..., DEVnm auf.

Handelt es sich bei dem geteilten Medium SHM beispielsweise um Schleifleiter einer Elektrohängebahn, so wäre das Steuergerät CTRL als zentrale Automatisierungslogik ausgeführt. Das Ethernet ETH würde dann weiterhin die Master-Modems MM1, ..., MMn über ihre Master-Traffic-Manager MTM1, ..., MTMn und/oder ihre Master-Modem-Manager MMM1, ..., MMMn mit Telegrammen, die beispielsweise Steuerbefehle des Steuergeräts CTRL sein können, versorgen. Das gemeinsam genutzte Medium SHM könnte dabei Schleifkontakte aufweisen, die Slave-Modems SM1, ..., SMn wären also beweglich gegenüber dem gemeinsam genutzten Medium SHM. Bei der Ethernet-Verbindung ETH kann es sich um jedwede Datenverbindung handeln. Es ist also neben einem handelsüblichen LAN ebenso ein WLAN denkbar.
Das gemeinsam genutzte Medium SHM weist in FIG 1 zwei Bereiche auf. Der linke Bereich, der über Master-Modem MM1 erreichbar ist, beinhaltet das Slave-Modem SM1 und das Slave-Modem SM2. Der rechte Bereich, der über das Master-Modem MMn erreichbar ist, beinhaltet das Slave-Modem SMn. Die drei Punkte zwischen dem linken und dem rechten Bereich symbolisieren dabei, dass das Master-Modem MM1 nicht zwangsläufig das Slave-Modem SMn erreichen kann und analog das Master-Modem MMn nicht zwangsläufig die Slave-Modems SM1 und SM2 erreichen kann. Es soll vielmehr davon ausgegangen werden, dass das Master-Modem MM1 nur die ihm zugeordneten Slave-Modems SM1 und SM2 erreicht und das Master-Modem MMn nur das ihm zugeordnete Slave-Modem SMn erreicht. So könnte der Master-Traffic-Manager MTM1 unter Anwendung des erfindungsgemäßen Verfahrens Telegramme, die für eines der Endgeräte DEV10 oder DEV11 bestimmt sind, entsprechend gruppieren und über das gemeinsam genutzte Medium SHM an das Slave-Modem SM1 senden. Analog gilt dies für über das Slave-Modem SM2 erreichbare Endgeräte, die in FIG 1 nur über drei Punkte angedeutet sind.

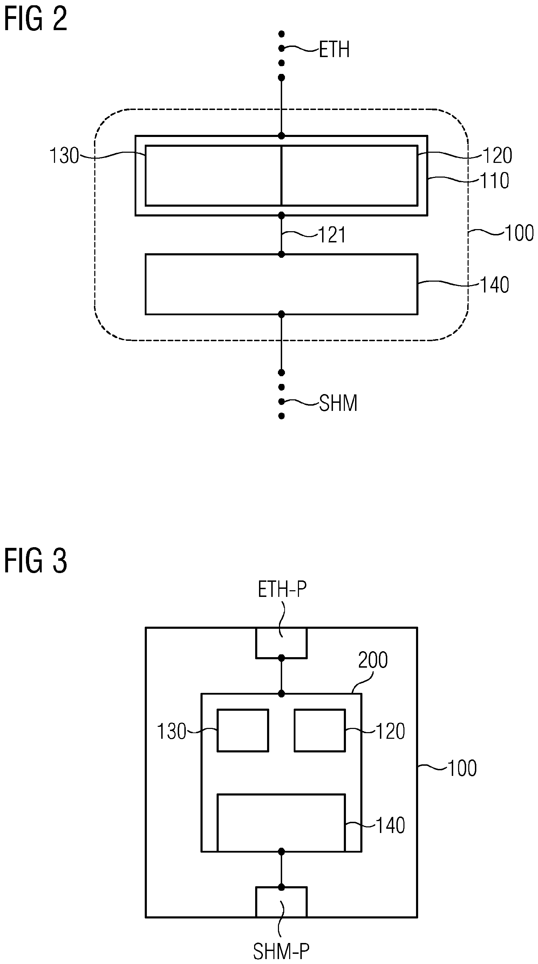

FIG 2 zeigt eine Modem-Anordnung 100, die einen Traffic-Manager 120 und einen Modem-Manager 130 aufweist. Eine Management-Anordnung 110 umfasst dabei den Traffic-Manager 120 und den Modem-Manager 130. Die Management-Anordnung 110 ist über eine interne Verbindung 121 mit einem Modem 140 verbunden. Aus der Modem-Anordnung 100 heraus führt einerseits eine Verbindung in Richtung gemeinsam genutztem Medium SHM und oben andererseits eine Verbindung in Richtung Ethernet ETH. Die gezeigte Anordnung soll darstellen, wie eine Anordnung zur Durchführung des erfindungsgemäßen Verfahrens prinzipiell aussehen könnte. Die Verbindung in Richtung Ethernet ETH könnte dabei als LAN oder als WLAN ausgeführt sein. Die Verbindung in Richtung des gemeinsam genutzten Mediums könnte dabei als Schleifleiterkontakt ausgeführt sein. Die Management-Anordnung 110 könnte dabei ein Linux-System sein, auf dem jeweils ein Task für den Modem-Manager 130 und den Traffic-Manager 120 läuft. Die Tasks können dabei vorteilhaft zur parallelen Ausführung ausgebildet sein.

FIG 3 zeigt unter Beibehaltung der Bezugszeichen aus FIG 2 eine Modem-Anordnung 100, die eine Modem-Prozessoreinheit 200 aufweist. Die Modem-Prozessoreinheit 200 enthält dabei das eigentliche Modem 140, den Traffic-Manager 120 und den Modem-Manager 130. Es ist dabei denkbar, dass der Modem-Manager 130 und der Traffic-Manager 120 als System-on-a-Chip (auch: SOC) realisiert sind. Das Modem 140 stellt die physikalische Schnittstelle dar um auf das gemeinsam genutzte Medium zugreifen zu können. Des Weiteren sind ein Ethernet-Port ETH-P und ein Port zum Zugriff auf das gemeinsam genutzte Medium SHM-P gezeigt. Bei dem Ethernet-Port ETH-P kann es sich beispielsweise um eine RJ45-Buchse handeln. Je nach verwendetem gemeinsam genutztem Medium sind für den Port für den Zugriff auf das gemeinsam genutzte Medium SHM-P Schraub-, Steck-, Klemm- oder entsprechende weitere Verbindungen denkbar. Die gezeigte Modem-Prozessor-Einheit 200 soll lediglich ein Ausführungsbeispiel darstellen. Es ist ebenso denkbar, dass einzelne Komponenten der Modem-Anordnung 100 an anderen Stellen des Netzwerks oder in anderen Geräten realisiert werden.

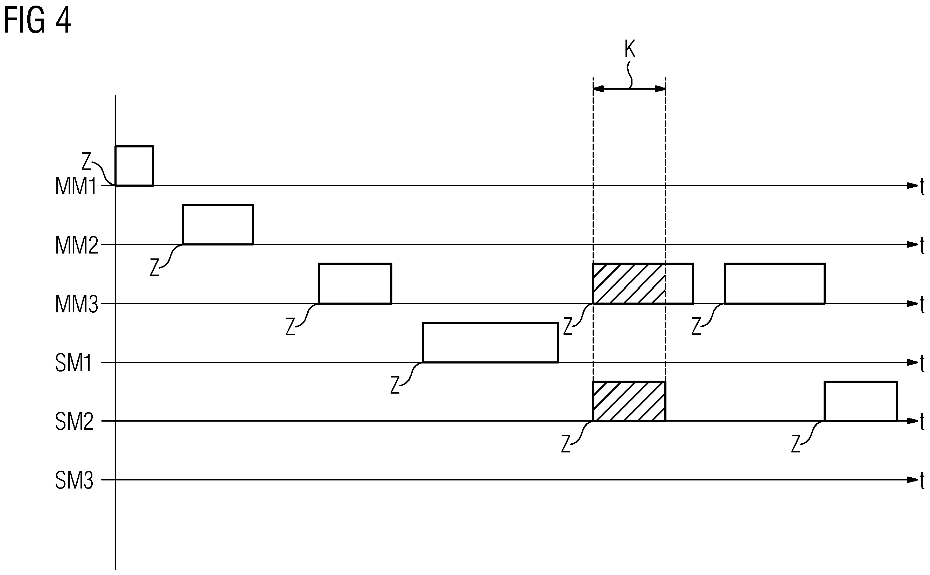

FIG 4 zeigt exemplarisch den Zugriffsverlauf über die Zeit t von drei Master-Modems MM1, MM2 und MM3 sowie drei Slave-Modems SM1, SM2 und SM3 auf das gemeinsam genutzte Medium SHM. Greift eines der Modems auf das gemeinsam genutzte Medium SHM zu, so ist dies durch einen Zugriff Z mit einer der Dauer des Zugriffs Z entsprechenden Länge gekennzeichnet. Während des Zugriffs Z können Telegramme über das gemeinsam genutzte Medium SHM übertragen werden. Zuerst greift das Master-Modem MM1 auf das gemeinsam genutzte Medium SHM zu. In kurzem Abstand darauf folgen jeweils nacheinander die Zugriffe Z der Master-Modems MM2 und des Master-Modems MM3. Der Zugriff Z des Slave-Modems SM1 ist von längerer Dauer als alle anderen Zugriffe Z. Nachdem das Slave-Modem SM1 seinen Zugriff beendet hat, greifen das Master-Modem MM3 und das Slave-Modem SM2 gleichzeitig auf das geteilte Medium zu. Es existiert also eine Kollision K, die den Bereich kennzeichnet, in dem beide Modems gleichzeitig senden. In diesem Fall beendet das Slave-Modem SM2 vor dem Master-Modem MM3 seinen Zugriff Z. Es ist denkbar, dass während keinem der beiden Zugriffe Z erfolgreich Telegramme übertragen werden konnten.
Eine mögliche, gezeigte Vorgehensweise ist, dass das Master-Modem MM3 nach kurzer Zeit seinen Zugriff Z auf das gemeinsam genutzte Medium SHM wiederholt und anschließend auch das Slave-Modem SM2 seinen Zugriff Z auf das geteilte Medium durchführen kann. Das Slave-Modem SM3 hat in dem gezeigten Bereich keinen Zugriff Z durchgeführt. Während der Zugriffe Z können sowohl einzelne Telegramme als auch Gruppen von Telegrammen übertragen werden. Zur Vermeidung von Kollisionen K können kollisionsvermeidende Verfahren eingesetzt werden.

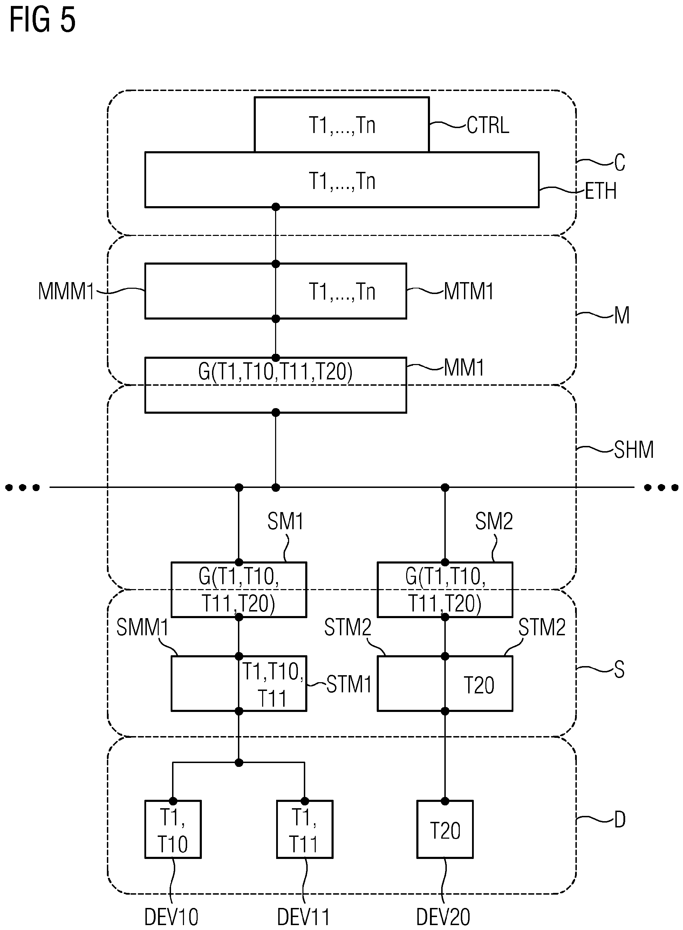

FIG 5 zeigt einen Ausschnitt eines Netzwerks. Die Bezugszeichen sind dabei weitestgehend analog zu FIG 1. Beispielhaft wird hier dargestellt, wie Telegramme T1, ..., Tn, die in diesem Fall im Steuergerät CTRL generiert werden, über das Ethernet ETH an die Master-Ebene M weitergegeben werden. Der Master-Traffic-Manager MTM1 erhält alle Telegramme T1, ..., Tn und kann die Struktur der über das Master-Modem MM1 erreichbaren Endgeräte DEV10, DEV11 und DEV20 vom Master-Modem-Manager MMM1 erhalten. Der Master-Traffic-Manager MTM1 extrahiert die Telegramme, die für den Versand über das Master-Modem MM1 geeignet sind. Der Master-Traffic-Manager MTM1 führt in diesem Fall die Telegramme T1, T10, T11 und T20 zur Gruppe G zusammen. Die Gruppe G wird anschließend vom Master-Modem MM1 über das gemeinsam genutzte Medium SHM an die beiden erreichbaren Slave-Modems SM1 und SM2 gesandt. Die Slave-Traffic-Manager STM1 und STM2 erhalten die Gruppe G und extrahieren daraus die Telegramme, die für über sie erreichbare Endgeräte DEV10, DEV11 und DEV20 bestimmt sind. Der Slave-Traffic-Manager STM1 extrahiert also die Telegramme T1, T10 und T11. Der Slave-Traffic-Manager STM2 extrahiert aus der Gruppe G lediglich das Telegramm T20. Im weiteren Verlauf schicken die Slave-Traffic-Manager STM1 und STM2 die jeweiligen Telegramme an die Endgeräte DEV10, DEV11 und DEV20. Hier ist es denkbar, dass alle Telegramme an alle jeweils erreichbaren Endgeräte DEV10, DEV11 und DEV20 gesandt werden, oder dass die Telegramme erneut aufgeteilt werden und nur dem jeweiligen Empfänger zugestellt werden. Beispielhaft ist in FIG 5 dargestellt, dass das Telegramm T1 jeweils für beide Endgeräte DEV10 und DEV11 relevant ist. Die Telegramme T10 und T11 werden jeweils nur dem Endgerät, für das sie bestimmt sind, zugestellt.

Zusammenfassend betrifft die Erfindung ein Verfahren zum Übertragen von Telegrammen T1, ..., Tn über ein gemeinsam genutztes Medium SHM in einem Netzwerk 1, insbesondere in einem industriellen Schleifleiternetzwerk, wobei das Netzwerk 1 ein Steuergerät CTRL, eine Master-Ebene M, das gemeinsam genutzte Medium SHM, eine Slave-Ebene S und Endgeräte DEV10, ..., DEVnm aufweist. Ein Zugriff Z auf das gemeinsam genutzte Medium SHM erfolgt jeweils über master- und/oder slaveseitige Modems MM1, ..., MMn; SM1, ..., SMn, wobei das Steuergerät CTRL mit den Endgeräten DEV10, ..., DEVnm über das gemeinsam genutzte Medium SHM kommuniziert, wobei mindestens ein master- und/oder slaveseitiger Traffic-Manager MTM1, ..., MTMn; STM1, ..., STMn den master- und/oder slave-seitigen Modems MM1, ..., MMn; SM1, ..., SMn Telegramme T1, ..., Tn zur Verfügung stellt. Zur Reduzierung der Anzahl der Zugriffe Z auf das gemeinsam genutzte Medium SHM wird vorgeschlagen, dass die master- und/oder slaveseitigen Traffic-Manager MTM1, ..., MTMn; STM1, ..., STMn Kenntnis der Struktur von relevanten Teilen des Netzwerks aufweisen und die Telegramme T1, ..., Tn in Gruppen G von Telegrammen T1, ..., Tn zusammenfassen, wobei die master- und/ oder slave-seitiger Traffic-Manager MTM1, ..., MTMn; STM1, ..., STMn auf Basis von Informationen bezüglich der über den jeweiligen Traffic-Manager erreichbaren Modems MM1, ..., MMn; SM1, ..., SMn und/oder Endgeräten DEV10, ..., DEVnm die Gruppen von Telegrammen T1, ..., Tn bilden.

## Patentansprüche

1. Verfahren zum Übertragen von Telegrammen (T1, ..., Tn) über ein gemeinsam genutztes Medium (SHM) in einem Netzwerk (1), wobei das Netzwerk (1) ein Steuergerät (CTRL), eine Master-Ebene (M), das gemeinsam genutzte Medium (SHM), eine Slave-Ebene (S) und Endgeräte (DEV10, ..., DEVnm) aufweist,
wobei ein Zugriff (Z) auf das gemeinsam genutzte Medium (SHM) jeweils über master- und/oder slaveseitige Modems (MM1, ..., MMn; SM1, ..., SMn) erfolgt,
wobei das Steuergerät (CTRL) mit den Endgeräten (DEV10, ..., DEVnm) über das gemeinsam genutzte Medium (SHM) kommuniziert,
wobei mindestens ein master- und/oder slaveseitiger Traffic-Manager (MTM1, ..., MTMn; STM1, ..., STMn) den master- und/oder slave-seitigen Modems (MM1, ..., MMn; SM1, ..., SMn) Telegramme (T1, ..., Tn) zur Verfügung stellt, **dadurch gekennzeichnet, dass** die master- und/oder slaveseitigen Traffic-Manager (MTM1, ..., MTMn; STM1, ..., STMn) : Kenntnis der Struktur von relevanten Teilen des Netzwerks (1) aufweisen,
die Telegramme (T1, ..., Tn) in Gruppen (G) von Telegrammen (T1, ..., Tn) zusammenfassen und auf Basis von Informationen bezüglich der über den jeweiligen Traffic-Manager (MTM1, ..., MTMn; STM1, ..., STMn) erreichbaren Modems (MM1, ..., MMn; SM1, ..., SMn) und/oder Endgeräten (DEV10, ..., DEVnm) die Gruppen (G) von Telegrammen (T1, ..., Tn) bilden.

2. Verfahren nach Anspruch 1, wobei der master- und/oder slaveseitige Traffic-Manager (MTM1, ..., MTMn; STM1, ..., STMn) auf Basis der Kenntnis der Struktur von relevanten Teilen des Netzwerks (1) die Gruppen (G) von Telegrammen (T1, ..., Tn) bildet.

3. Verfahren nach einem der vorhergehenden Ansprüche, wobei der master- und/oder slaveseitige Traffic-Manager (MTM1, ..., MTMn; STM1, ..., STMn) nur diejenigen Telegramme (T1, ..., Tn) in Gruppen von Telegrammen (G) zusammenfasst, die für Modems (MM1, ..., MMn; SM1, ..., SMn) und/oder Endgeräte (DEV10, ..., DEVnm) bestimmt sind, die über den jeweiligen Traffic-Manager (MTM1, ..., MTMn; STM1, ..., STMn) erreichbar sind.

4. Verfahren nach einem der vorhergehenden Ansprüche, wobei mindestens ein master- und/oder slaveseitiger-Modem-Manager (MMM1, ..., MMMn; SMM1, ..., SMMn) die Modems (MM1, ..., MMn; SM1, ..., SMn) ansteuert und/oder ausliest.

5. Verfahren nach Anspruch 4, wobei der master- und/oder slaveseitige Traffic-Manager (TM1, ..., TMn) die Kenntnis der Struktur von relevanten Teilen des Netzwerks (1) zumindest teilweise von einem master- und/oder slaveseitige Modem-Manager (MMM1, ..., MMMn; SMM1, ..., SMMn) bezieht.

6. Verfahren nach einem der vorhergehenden Ansprüche, wobei der master- und/oder slaveseitige Traffic-Manager (TM1, ..., TMn) für jeden Zugriff (Z) auf das gemeinsam genutzte Medium (SHM) entscheidet, welche Gruppen (G) von Telegrammen (TM1, ..., TMn) mit diesem Zugriff (Z) gesendet werden.

7. Verfahren nach einem der vorhergehenden Ansprüche, wobei der Traffic-Manager (TM1, ..., TMn) Prioritätslevels (PL1, ..., PLn) zum Bilden der Gruppen (G) von Telegrammen (TM1, ..., TMn) heranzieht.

8. Verfahren nach einem der vorhergehenden Ansprüche, wobei zur Vermeidung von Kollisionen im gemeinsam genutzten Medium (SHM) ein Protokoll zur Kollisionsvermeidung bei der Übertragung von Telegrammen (T1, ..., Tn) zum Einsatz kommt.

9. Netzwerkanordnung zum Übertragen von Telegrammen (T1, ... , Tn) über ein gemeinsam genutztes Medium (SHM) in einem Netzwerk (1), mittels eines Verfahrens nach einem der Ansprüche 1 bis 8, aufweisend
• ein Steuergerät (CTRL), eine Master-Ebene (M), ein gemeinsam genutztes Medium (SHM), eine Slave-Ebene (S) und Endgeräte (DEV10, ..., DEVnm),
• je mindestens ein master- und ein slave-seitiges Modem (MM1, ..., MMn; SM1, ... , SMn) und
• je mindestens ein master- und ein slave-seitiger Traffic-Manager (MTM1, ..., MTMn; STM1, ..., STMn), die dazu dienen, den master- und/oder slave-seitigen Modems (MM1, ..., MMn; SM1, ... , SMn) Telegramme (T1, ... , Tn) zur Verfügung zu stellen,
**dadurch gekennzeichnet dass**, je mindestens ein master- und ein slave-seitiger Traffic-Manager (MTM1, ..., MTMn; STM1, ..., STMn) Kenntnis der Struktur von relevanten Teilen des Netzwerks (1) aufzuweisen und die Telegramme (T1, ..., Tn) in Gruppen (G) von Telegrammen (T1, ..., Tn) zusammenzufassen und auf Basis von Informationen bezüglich der über den jeweiligen Traffic-Manager (MTM1, ..., MTMn; STM1, ..., STMn) erreichbaren Modems (MM1, ..., MMn; SM1, ..., SMn) und/oder Endgeräten (DEV10, ..., DEVnm) die Gruppen (G) von Telegrammen (T1, ..., Tn) bilden.

10. Netzwerkanordnung nach Anspruch 9, wobei das gemeinsam genutzte Medium (SHM) ein kabel- und/oder leitungsgebundenes Medium mit beweglichen Kontakten, insbesondere Schleifleitern, ist.

11. Modemanordnung (100) zur Durchführung eines Verfahrens nach einem der Ansprüche 1 bis 8, aufweisend mindestens ein Modem (140; MM1, ..., MMn; SM1, ... , SMn) und einen Traffic-Manager (120; MTM1, ..., MTMn; STM1, ..., STMn).

12. Modemanordnung (100) nach Anspruch 11, aufweisend einen Modem-Manager (130; MMM1, ..., MMMn; SMM1, ..., SMMn)

13. Industrielles Fördersystem, insbesondere ein Elektrohängebahn-System, aufweisend eine Netzwerkanordnung nach einem der Ansprüche 9 oder 10.

## Claims

1. Method for transmitting telegrams (T1, ..., Tn) via a shared medium (SHM) in a network (1), wherein the network (1) has a control device (CTRL), a master level (M), the shared medium (SHM), a slave level (S) and terminals (DEV10, ..., DEVnm), wherein an access (Z) to the shared medium (SHM) is carried out via master- and/or slave-side modems (MM1,..., MMn; SM1, ..., SMN) in each case,
wherein the control device (CTRL) communicates with the terminals (DEV10, ..., DEVnm) via the shared medium (SHM), wherein at least one master- and/or slave-side traffic manager (MTM1, ..., MTMn; STM1, ..., STMn) makes telegrams (T1, ..., Tn) available to the master- and/or slave-side modems (MM1, .., MMn; SM1, ..., SMn)
**characterised in that** the master- and/or slave-side traffic managers (MTM1, ..., MTMn; STM1, ..., STMn)
• have knowledge of the structure of relevant parts of the network (1),
• compile the telegrams (T1, ..., Tn) into groups (G) of telegrams (T1, ..., Tn) and
form the groups (G) of telegrams (T1, ..., Tn) on the basis of information with respect to the modems (MM1, ..., MMn; SM1, ..., SMn) and/or terminals (DEV10, ..., DEVnm) which can be reached via the respective traffic manager (MTM1, ..., MTMn; STM1, ..., STMn).

2. Method according to claim 1, wherein the master- and/or slave-side traffic manager (MTM1, ..., MTMn; STM1, .., STMn) forms the groups (G) of telegrams (T1, ..., Tn) on the basis of the knowledge of the structure of relevant parts of the network (1) .

3. Method according to one of the preceding claims, wherein the master and/or slave-side traffic manager (MTM1, ..., MTMn; STM1, ..., STMn) only compile the telegrams (T1, ..., Tn) into groups of telegrams (G), which are specific to modems (MM1, ..., MMn; SM1, ..., SMn) and/or terminals (DEV10, ..., DEVnm), which can be reached via the respective traffic manager (MTM1, ..., MTMn; STM1, ..., STMn).

4. Method according to one of the preceding claims, wherein at least one master- and/or slave-side modem manager (MMM1, ..., MMMn; SMM1, ..., SMMn) controls and/or reads out the modems (MM1, ..., MMn; SM1, ..., SMn).

5. Method according to claim 4, wherein the master- and/or slave-side traffic manager (TM1, ..., TMn) obtains the knowledge of the structure of relevant parts of the network (1) at least partially from a master- and/or slave-side modem manager (MMM1, ..., MMMn; SMM1, ..., SMMn).

6. Method according to one of the preceding claims, wherein for each access (Z) to the shared medium (SHM) the master- and/or slave-side traffic manager (TM1, ..., TMn) decides which groups (G) of telegrams (TM1, ..., TMn) are sent with this access (Z).

7. Method according to one of the preceding claims, wherein the traffic manager (TM1, ..., TMn) uses priority levels (PL1, ..., PLn) to form the groups (G) of telegrams (TM1, ..., TMn).

8. Method according to one of the preceding claims, wherein in order to avoid collisions in the shared medium (SHM), a protocol is used to avoid collisions when transmitting telegrams (T1, .., Tn) .

9. Network arrangement for transmitting telegrams (T1, ..., Tn) via a shared medium (SHM) in a network (1), by means of a method according to one of claims 1-8, having
• a control device (CTRL), a master level (M), a shared medium (SHM), a slave level (S) and terminals (DEV10, ..., DEVnm),
• in each case at least one master- and/or slave-side modem (MM1, ..., MMN; SM1, ..., SMn) and
• in each case at least one master- and/or slave-side traffic manager (MTM1, ..., MTMn; STM1, ..., STMn) which is used to make telegrams (T1, ..., Tn) available to the master- and/or slave-side modem (MM1, ..., MMN; SM1, ..., SMn),
**characterised in that** in each case at least one master- and one slave-side traffic manager (MTM1, ..., MTMn; STM1, ..., STMn) has knowledge of the structure of relevant parts of the network (1) and compiles the telegrams (T1, ..., Tn) into groups (G) of telegrams (T1, ..., Tn) and forms the groups (G) of telegrams (T1, ..., Tn) on the basis of information with respect to the modems (MM1, ..., MMn; SM1, ..., SMn) and/or terminals (DEV10, ..., DEVnm) which can be reached via the respective traffic manager (MTM1, ..., MTMn; STM1, ..., STMn).

10. Network arrangement according to claim 9, wherein the shared medium (SHM) is a cable and/or line-bound medium with movable contacts, in particular contact wires.

11. Modem arrangement (100) for carrying out a method according to one of claims 1-8, having at least one modem (140; MM1, ..., MMn; SM1,..., SMN) and a traffic manager (120; MTM1, ..., MTMn; STM1, ..., STMn).

12. Modem arrangement (100) according to claim 11, having a modem manager (130; MMM1, ..., MMMn; SMM1, ..., SMMn)

13. Industrial conveying system, in particular an electric monorail system, having a network arrangement according to one of claims 9 or 10.

## Revendications

1. Procédé de transmission de télégrammes (T1, ..., Tn) sur un support (SHM) partagé dans un réseau (1), le réseau (1) ayant un appareil (CTRL) de commande, un plan (M) maître, le support (SHM) partagé, un plan (S) esclave et des terminaux (DEV10, ..., DEVnm),
dans lequel un accès (Z) au support (SHM) partagé s'effectue respectivement par des modems (MM1, ..., MMn; SM1, ..., SMn) du côté maître et/ou du côté esclave,
dans lequel l'appareil (CTRL) de commande communique avec les terminaux (DEV10, ..., DEVnm) par le support (SHM) partagé, dans lequel au moins un gestionnaire (MTM1, ..., MTMn; STM1, ..., STMn) de trafic du côté maître et/ou du côté esclave met des télégrammes (T1, ..., Tn) à disposition des modems (MM1, ..., MMn; SM1, ..., SMn) du côté maître et/ou du côté esclave,
**caractérisé en ce que**
les gestionnaires (MTM1, ..., MTMn; STM1, ..., STMn) de trafic du côté maître et/ou du côté esclave ont connaissance de la structure de parties pertinentes du réseau (1),
regroupent les télégrammes (T1, ..., Tn) en groupes (G) de télégrammes (T1, ..., Tn) et
sur la base d'informations concernant les modems (MM1, ..., MMn; SM1, ..., SMn) et/ou des terminaux (DEV10, ..., DEVnm) pouvant être atteints par le gestionnaire (MTM1, ..., MTMn; STM1, ..., STMn) de trafic respectif forment les groupes (G) de télégrammes (T1, ..., Tn).

2. Procédé suivant la revendication 1, dans lequel le gestionnaire (MTM1, ..., MTMn; STM1, ..., STMn) de trafic du côté maître et/ou du côté esclave forme les groupes (G) de télégrammes (T1, ..., Tn) sur la base de la connaissance de la structure de parties pertinentes du réseau (1).

3. Procédé suivant l'une des revendications précédentes, dans lequel le gestionnaire (MTM1, ..., MTMn; STM1, ..., STMn) de trafic du côté maître et/ou du côté esclave regroupe en groupes de télégrammes (G) seulement les télégrammes (T1, ..., Tn), qui sont déterminés pour des modems (MM1, ..., MMn; SM1, ..., SMn) et/ou des terminaux (DEV10, ..., DEVnm) pouvant être atteints par le gestionnaire (MTM1, ..., MTMn; STM1, ..., STMn) de trafic respectif.

4. Procédé suivant l'une des revendications précédentes, dans lequel au moins un gestionnaire (MMM1, ..., MMMn; SMM1, ..., SMMn) de modem du côté maître et/ou du côté esclave commande et/ou lit les modems (MM1, ..., MMn; SM1, ..., SMn).

5. Procédé suivant la revendication 4, dans lequel le gestionnaire (TM1, ..., TMn) de trafic du côté maître et/ou du côté esclave se procure la connaissance de la structure de parties pertinentes du réseau (1), au moins en partie, d'un gestionnaire (MMM1, ..., MMMn; SMM1, ..., SMMn) de modem du côté maître et/ou du côté esclave.

6. Procédé suivant l'une des revendications précédentes, dans lequel le gestionnaire (TM1, ..., TMn) de trafic du côté maître et/ou du côté esclave décide, pour chaque accès (Z) au support (SHM) partagé, des groupes (G) de télégrammes (TM1, ..., TMn) envoyés par cet accès (Z).

7. Procédé suivant l'une des revendications précédentes, dans lequel le gestionnaire (TM1, ..., TMn) de trafic met à profit des niveaux (PL1, ..., PLn) de priorité pour former des groupes (G) de télégrammes (TM1, ..., TMn).

8. Procédé suivant l'une des revendications précédentes, dans lequel, pour empêcher des collisions dans le support (SHM) partagé, un protocole pour empêcher les collisions est utilisé lors de la transmission de télégrammes (T1, ..., Tn).

9. Agencement de réseau pour la transmission de télégrammes (T1, ..., Tn) sur un support (SHM) partagé dans un réseau (1), au moyen d'un procédé suivant l'une des revendications 1 à 8, comportant
• un appareil (CTRL) de commande, un plan (M) maître, un support (SHM) partagé, un plan (S) esclave et des terminaux (DEV10, ..., DEVnm),
• respectivement au moins un modem (MM1, ..., MMn; SM1, ..., SMn) du côté maître et du côté esclave et
• respectivement au moins un gestionnaire (MTM1, ..., MTMn; STM1, ..., STMn) de trafic du côté maître et du côté esclave, qui servent à mettre des télégrammes (T1, ..., Tn) à disposition des modems (MM1, ..., MMn; SM1, ..., SMn) du côté maître et/ou du côté esclave,
**caractérisé en ce que**, respectivement, au moins un gestionnaire (MTM1, ..., MTMn; STM1, ..., STMn) de trafic du côté maître et/ou du côté esclave ont connaissance de la structure de parties pertinentes du réseau (1) et regroupent les télégrammes (T1, ..., Tn) en groupes (G) de télégrammes (T1, ..., Tn) et sur la base d'informations concernant les support (MM1, ..., MMn; SM1, ..., SMn) et/ou les terminaux (DEV10, ..., DEVnm), pouvant être atteints par le gestionnaire (MTM1, ..., MTMn; STM1, ..., STMn) de trafic respectif, forment les groupes (G) de télégrammes (T1, ..., Tn).

10. Agencement de réseau suivant la revendication 9, dans lequel le support (SHM) partagé est un support relié par câble et/ou par ligne et ayant des contacts mobiles, notamment des lignes de contact.

11. Agencement (100) de modem pour effectuer un procédé suivant l'une des revendications 1 à 8, ayant au moins un modem (140 ; MM1, ..., MMn; SM1, ... SMn) et un gestionnaire (120; MTM1, ..., MTMn; STM1, ..., STMn) de trafic.

12. Agencement (100) de modem suivant la revendication 11, ayant un gestionnaire (130; MMM1, ..., MMMn; SMM1, ..., SMMn) de modem.

13. Système de convoyeur industriel, notamment transporteur aérien électrique, ayant un agencement de réseau suivant l'une des revendications 9 ou 10.
